Europäisches Patentamt

European Patent Office

Office européen des brevets

(19)

(11) Veröffentlichungsnummer: **0 146 885
B1**

(12) **EUROPÄISCHE PATENTSCHRIFT**

(45) Veröffentlichungstag der Patentschrift:
**20.04.88**

(51) Int. Cl.⁴: **B 01 D 53/34,** B 01 D 47/16

(21) Anmeldenummer: **84115298.6**

(22) Anmeldetag: **12.12.84**

(54) **Verfahren und Vorrichtung zum Reinigen von Gasen.**

(30) Priorität: **12.12.83 DE 3344875**

(43) Veröffentlichungstag der Anmeldung:
**03.07.85 Patentblatt 85/27**

(45) Bekanntmachung des Hinweises auf die Patenterteilung:
**20.04.88 Patentblatt 88/16**

(84) Benannte Vertragsstaaten:
**CH DE FR GB IT LI NL SE**

(56) Entgegenhaltungen:
**DE - B - 2 236 389
FR - A - 2 383 693**

(73) Patentinhaber: **GESELLSCHAFT FÜR KORROSIONSFORSCHUNG MBH, Neubertstrasse 53, D-2000 Hamburg 76 (DE)**

(72) Erfinder: **Voss, Hans, Ing. grad., Winsener Strasse 111, D-2100 Hamburg 90 (DE)**
Erfinder: **Voss, Hans-Joachim, Dr.-Ing., Lohberger Strasse 55, D-2117 Tostedt (DE)**
Erfinder: **Möller, Joachim, Fröbelstrasse 12, D-2080 Pinneberg (DE)**

(74) Vertreter: **Klingseisen, Franz, Dipl.-Ing. et al, Dr. F. Zumstein sen. Dr. E. Assmann Dr. F. Zumstein jun. Dipl.-Ing. F. Klingseisen Bräuhausstrasse 4, D-8000 München 2 (DE)**

## Beschreibung

Die Erfindung betrifft ein Verfahren zum Reinigen von Gasen nach dem Oberbegriff des Anspruchs 1 sowie eine Vorrichtung zur Durchführung dieses Verfahrens nach dem Oberbegriff des Anspruchs 7.

Aus der DE-PS 22 36 389 ist ein derartiges Verfahren und eine Vorrichtung zum Reinigen von Gasen bekannt, wobei ein walzenförmiger Hohlkörper mit quer zu seiner Längsachse sich über seinen Aussenumfang erstreckenden Scheiben vorgesehen ist, die in einem Abstand voneinander angeordnet sind und in eine Netzflüssigkeit im Unterteil des den Walzenkörper und die Scheiben umgebenden Gehäuses eintauchen. Parallel zur Längsachse des Walzenkörpers verlaufen diametral einander gegenüberliegend Kanäle, die zum Ein- und Abführen des zu reinigenden Gases dienen, das den von innen beheizten Walzenkörper in Umfangsrichtung zwischen den Scheiben umströmt. Bei der Drehbewegung des halbgetauchten Walzenkörpers werden kontinuierlich Feststoffschichten auf den ausgetauchten Scheiben und auf dem freiliegenden Umfangsabschnitt des Walzenkörpers erzeugt, die mit Inhaltsstoffen der darüber geleiteten Gase reagieren. Dabei kommen unvermeidbar Schichten von unterschiedlichem Trocknungsgrad mit den zu reinigenden Gasen in Berührung, so dass bereits vor der Trocknung Nassreaktionen zum Verlust der Schicht und damit zu Störungen im Reaktionsverlauf führen. In vielen Fällen kommt es dabei nicht mehr zur Ausbildung von reaktionsaktiven Trockenschichten und damit zum völligen Versagen des Verfahrens. Die Reinigung von schadstoffbefrachteten Gasen, deren Temperatur wesentlich unter der Trocknungstemperatur der Reaktionsschicht liegt, gelingt bei diesem bekannten Verfahren nicht, weil die für die Trocknung der Schichten erforderliche Wärmemenge über den Walzenkörper und die Scheiben zugeführt werden muss, die durch das vorbeigeführte Gas dauernd abgekühlt werden. Ein weiterer Nachteil dieses bekannten Verfahrens besteht darin, dass die Gasstromwege in den zwischen den Scheiben gebildeten Reaktionskammern nicht veränderbar sind, so dass das monoreaktive Verhalten einer grossen Anzahl von Schadstoffverbindungen nicht beeinflusst werden kann.

Der Erfindung liegt die Aufgabe zugrunde, ein Verfahren und eine Vorrichtung der eingangs angegebenen Art so auszubilden, dass zur Verbesserung der Reinigungswirkung Nassreaktionen auch bei geringer Temperatur der zu reinigenden Gase mit noch nicht getrockneten Schichten vermieden werden.

Diese Aufgabe wird durch die Merkmale im Kennzeichen des Anspruchs 1 bzw. im Kennzeichen des Anspruchs 7 gelöst. Dadurch, dass nach dem Austauchen der Reaktionskammer aus der Netzflüssigkeit zunächst getrocknete Heissluft durch die Reaktionskammer geleitet und erst danach die zu reinigenden Gase eingeleitet werden, wird sichergestellt, dass zu keiner Zeit eine ungetrocknete Schicht mit den zu reinigenden Gasen in Berührung kommt. Dabei hat die Temperatur des zu reinigenden Gases keinen Einfluss auf die Trocknung der Feststoffschichten durch die getrennt zugeführte Heissluft.

Vorteilhafte Ausgestaltungen der Erfindung sind in den weiteren Ansprüchen und in der nachfolgenden Beschreibung wiedergegeben.

Eine beispielsweise Ausführungsform der Erfindung wird nachfolgend anhand der Zeichnung näher erläutert. Es zeigen

Fig. 1 in einer teilweise aufgebrochenen perspektivischen Ansicht schematisch eine Vorrichtung zum Reinigen von Gasen, und

Fig. 2 in gleicher Ansicht eine abgewandelte Ausführungsform.

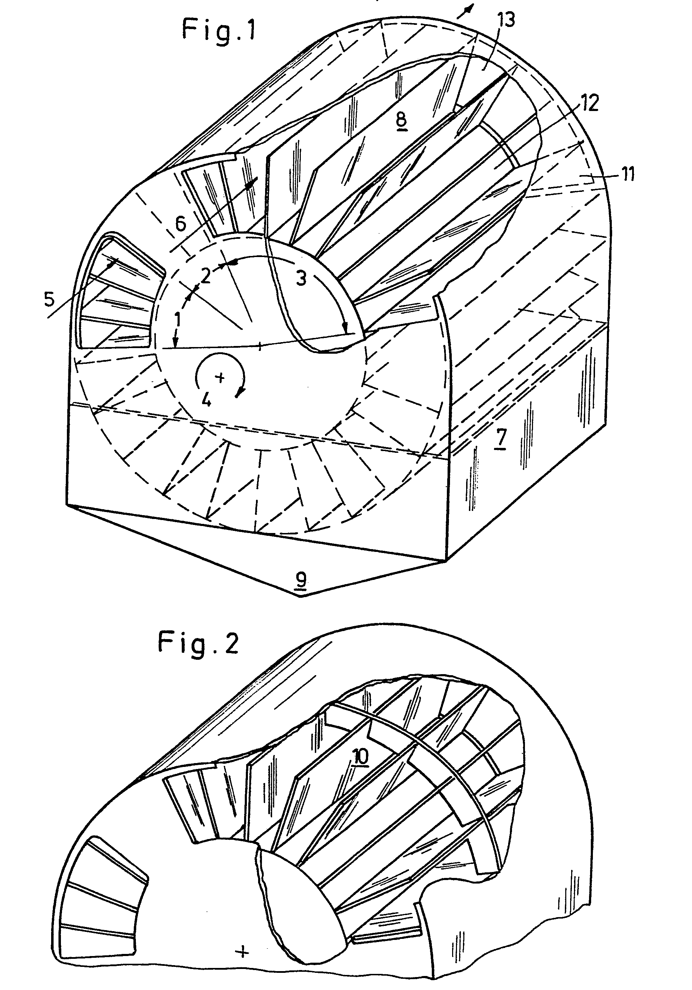

In einem Gehäuse 11 ist ein Hohlzylinder 12 drehbar gelagert, auf dessen Aussenumfang Platten 8 so angeordnet sind, dass sie sich längs der Achse des Zylinders 12 und in radialer Richtung erstrecken. Die Platten 8 sind in Umfangsrichtung in einem geringen Abstand voneinander angeordnet und bilden zwischen sich, dem dazwischenliegenden Umfangsabschnitt des Zylinders 12 und dem den freien Rand der Platten 8 eng umschliessenden, im Oberteil tonnenförmigen Gehäuse 11, Reaktionskammern 13. Das Gehäuse 11 enthält im Unterteil eine schichtbildende Netzflüssigkeit, deren Niveau bei 7 angedeutet ist, wobei der Hohlzylinder 12 teilweise in die Netzflüssigkeit eintaucht und auf den Stirnseiten so weit geschlossen ist, dass keine Netzflüssigkeit in den Hohlzylinder eindringen kann. Der Hohlzylinder 12 dreht sich in Richtung des Pfeils 4. Im Bereich der aus der Netzflüssigkeit austauchenden Reaktionskammern 8 ist auf der Stirnseite des Gehäuses 11 eine Lufteintrittsöffnung 5 ausgebildet, der auf der gegenüberliegenden Stirnseite des Gehäuses 11 eine entsprechende, nicht dargestellte Luftaustrittsöffnung zugeordnet ist. Bei dem dargestellten Ausführungsbeispiel erstreckt sich die Lufteintrittsöffnung 5 über die radiale Abmessung der Reaktionskammern 13 ist in Umfangsrichtung über etwa drei Reaktionskammern. In Umfangsrichtung gesehen ist in einem Abstand von der Lufteintrittsöffnung eine Gaseintrittsöffnung 6 ausgebildet, der ebenfalls auf der gegenüberliegenden Stirnseite des Gehäuses 11 eine nicht dargestellte Gasaustrittsöffnung zugeordnet ist. Die Gasein- und Austrittsöffnungen erstrecken sich ebenfalls über die radiale Höhe der Reaktionskammern 13, jedoch über einen grösseren Umfangsabschnitt, wie durch den Sektor 3 in Fig. 1 angedeutet ist. Von der sich über den Sektor 1 erstreckenden Lufteintrittsöffnung 5 ist die Gaseintrittsöffnung 6 in einem dem Sektor 2 entsprechenden Abstand angeordnet, der sich beispielsweise in Umfangsrichtung über zwei Reaktionskammern 13 erstreckt.

Beim Betrieb der Vorrichtung werden die Platten 8 und der Aussenumfang des Hohlzylinders 12 aufgrund der Drehbewegung in Richtung des Pfeiles 4 durch die Netzflüssigkeit bewegt, wobei diese Flächen beim Austauchen abtropfen. Sie gelangen im Sektor 1 vor die Lufteintrittsöffnung 5, durch die trockene Heissluft eingeleitet wird, welche auf der gegenüberliegenden Stirnseite des Gehäuses 11 austritt und ausserhalb des Gehäuses 11 in einem geschlossenen Kreislauf getrocknet und wieder aufgeheizt wird, bevor sie wieder durch die Lufteintrittsöffnung 5 eingeleitet wird. Dabei werden die auf den Platten 8 und den entsprechenden Umfangsabschnitten des Hohlzylinders 12 befindlichen Schichten vollständig durchgetrocknet, ohne dass sie mit den zu reinigenden Gasen in Berührung kommen. Nach vollständiger Durchtrocknung gelangen die Reaktionskammern 13 in den Sektor 2, der den bei 5 eingeleiteten Trockenluftstrom von dem bei 6 eingeleiteten schadstoffbefrachteten Gasstrom trennt und als Dichtungsabschnitt zwischen den beiden Eintrittsöffnungen 5 und 6 ausgebildet ist. Der bei 6 im Sektor 3 eintretende Gasstrom durchströmt mehrere Reaktionskammern 13 und tritt nach Reaktion mit den Trockenschichten auf den beweglichen Innenflächen der Reaktionskammern 13 durch eine geometrisch gleichgeartete Öffnung auf der gegenüberliegenden Stirnseite des Gehäuses gereinigt aus. Die mit Trockenschichten versehenen Innenflächen der Reaktionskammern 13 tauchen danach wieder in die Netzflüssigkeit ein, wobei sich diese Feststoffschichten mit den Reaktionsprodukten selbsttätig ablösen. Dabei können die Reaktionsprodukte zum Teil in der Netzflüssigkeit in Lösung gehen oder auch zum Teil ungelöst, z.B. als Salz, auf den trichterförmigen Boden 9 des Gehäuses 11 absinken. Zum Austragen derartiger ungelöster Stoffe kann eine entsprechende Austragseinrichtung vorgesehen werden, die nicht dargestellt ist.

Es kann auch ein Durchfluss im Unterteil des Gehäuses 11 zur kontinuierlichen oder intermittierenden Erneuerung der Netzflüssigkeit vorgesehen werden. Ein solcher Durchfluss der Netzflüssigkeit, vorzugsweise in Längsrichtung der Reaktionskammern 13 bzw. des Hohlzylinders 12 kann das Ablösen der Feststoffschichten begünstigen, wobei die Netzflüssigkeit ausserhalb des Gehäuses in einem geschlossenen Kreislauf gereinigt werden kann.

Die schichtbildende Netzflüssigkeit ist so aufgebaut, dass die in den Gasen enthaltenen Verunreinigungen und Schadstoffe beim Kontakt mit der auf den beweglichen Innenflächen der Reaktionskammern 13 gebildeten festen Oberflächenschicht an dieser gebunden werden, wobei sich die Oberflächenschicht infolge der Reaktion mit den in dem Gas enthaltenen Teilchen umwandelt und erschöpft. Die erschöpfte Schicht wird in der Netzflüssigkeit normalerweise leicht angelöst. In schwierigeren Fällen werden der Netzflüssigkeit Reagenzien zugegeben, die eine Veränderung der Oberflächenspannung der reagierten Schicht beim Wiedereintauchen in die Netzflüssigkeit bewirken, wodurch das selbsttätige Ablösen auch solcher Schichten gewährleistet wird, die sich normalerweise nicht leicht in der unbehandelten Netzflüssigkeit ablösen. Anschliessend werden die beweglichen Innenflächen der Reaktionskammern 13 mit frischer Netzflüssigkeit benetzt, worauf der dabei entstehende Flüssigkeitsfilm durch den Heissluftstrom zur Ausbildung einer neuen festen Oberflächenschicht getrocknet wird.

Zur Bildung der Oberflächenschicht werden wasserlösliche Verbindungen gewählt, die die in den Gasen enthaltenen Stoffe an der infolge Benetzung auf den Platten gebildeten festen Oberflächenschicht binden.

Zusätzlich zur Trocknung der Flüssigkeitsschicht auf den beweglichen Innenflächen der Reaktionskammern durch Heissluft kann eine Beheizung des Hohlzylinders 12 vorgesehen werden, welche die Trocknung unterstützt. Es ist aber auch möglich, den Hohlzylinder 12 zur Kühlung zu verwenden. Dadurch kann das Verfahren bei der jeweiligen für den Reinigungsverlauf günstigsten Temperatur durchgeführt werden, ohne dass auf die Besonderheiten der Schichttrocknung Rücksicht genommen werden muss. Der Temperaturbereich der zu reinigenden Gase erhält eine bisher nicht erreichte Bandbreite. Von Vorteil ist es für die Durchführung des Verfahrens, wenn man in der Netzflüssigkeit auf alle Stoffe verzichtet, die beim Eindampfen ein Gel mit porenreicher Struktur oder eine Gerüststruktur bilden, da die höchsten Reaktionsgeschwindigkeiten an extrem glatten Schichten erreicht werden.

Um quasi laminare Strömungen in den Reaktionskammern zu vermeiden, werden Ausbuchtungen und/oder Prallbleche, wie die in Fig. 2 sich quer zu den Reaktionskammern 13 erstreckenden Prallbleche 10 vorgesehen, die eine Verwirbelung des Gasstromes ergeben und an den Platten 8 befestigt sind.

Wenn Folgereaktionen vorgesehen werden, wird der Gasstrom auf der Eintrittsseite im Sektor 3 etwa über die Hälfte der Eintrittsöffnung 6 eingeleitet und in entsprechender Weise auf der Austrittsseite auf der gegenüberliegenden Stirnfläche durch den verbleibenden Abschnitt der Eintrittsöffnung 6 zurückgeleitet. Dabei wird nach einmaligem Durchleiten des verunreinigten Gases mit einer Verunreinigungskomponente auf der Feststoffschicht ein Reaktionsprodukt gebildet, das mit einer weiteren Verunreinigungskomponente in einer folgenden Reaktionskammer derart reagiert, dass auch diese aus dem Gas abgeschieden wird.

Durch das beschriebene Verfahren und die wiedergegebene Vorrichtung können insbesondere industrielle Abgase gereinigt werden, wobei die Reinigung durch kontinuierliche Regeneration der Feststoffschicht ohne Unterbrechung durchführbar ist.

Anstelle von Heissluft kann auch ein Gas, wie beispielsweise Stickstoff, für die Trocknung der aus der Netzflüssigkeit ausgetauchten Reaktionskammer verwendet werden.

Es ist auch nicht erforderlich, das Trocknungsgas im geschlossenen Kreislauf zu führen. Es ist auch möglich, im Trocknungsbereich das Gehäuse 11 in radialer Richtung mit Öffnungen zu versehen, so dass auch eine Einströmung von Trocknungsgas in radialer Richtung möglich ist.

5 0 146 885 6

## Patentansprüche

1. Verfahren zum Reinigen von Gasen, insbesondere von industriellen Abgasen, bei dem die Gase durch kontinuierlich sich erneuernde Reaktionskammern geleitet werden, deren bewegliche Innenflächen von einer dünnen Feststoffschicht überzogen sind, die durch Eintauchen dieser Innenflächen in eine Netzflüssigkeit und anschliessende Trocknung im ausgetauchten Zustand gebildet wird und deren chemische Zusammensetzung derart aufgebaut ist, dass die Oberfläche der Feststoffschicht mit festen, flüssigen, vorzugsweise gasförmigen Verunreinigungen des Gases reagiert und feste Reaktionsprodukte bildet, die sich nach Eintauchen in die Netzflüssigkeit zusammen mit den Feststoffschichten ablösen, dadurch gekennzeichnet, dass die Innenflächen der Reaktionskammern nach dem Austauchen aus der Netzflüssigkeit durch Heissluft getrocknet und danach die zu reinigenden Gase durch die Reaktionskammern geleitet werden.

2. Verfahren nach Anspruch 1, dadurch gekennzeichnet, dass die Feuchtigkeit des für die Trocknung verwendeten Gases in geschlossenem Kreislauf ausserhalb der Reaktionskammern abgeschieden wird.

3. Verfahren nach den Ansprüchen 1 und 2, dadurch gekennzeichnet, dass die Innenflächen der Reaktionskammern wenigstens teilweise gekühlt oder erwärmt werden.

4. Verfahren nach den Ansprüchen 1 bis 3, dadurch gekennzeichnet, dass als Netzflüssigkeit eine wässrige Lösung einer mit zumindest einer aus den Gasen abzugrennenden Komponente reagierenden Verbindung verwendet wird, die ein Reagens enthält, das ein derart gewonnenes Reaktionsprodukt bei Eintauchen in die Netzflüssigkeit durch Veränderung der Oberflächenspannung von der Trägeroberfläche ohne mechanische Unterstützung ablöst.

5. Verfahren nach den vorhergehenden Ansprüchen, dadurch gekennzeichnet, dass die Feststoffschichten derart zusammengesetzt werden, dass das nach einmaligem Überleiten des verunreinigten Gases mit einer Verunreinigungskomponente an der Trockenschichtoberfläche gebildete Reaktionsprodukt mit einer weiteren Verunreinigungskomponente in einer folgenden Reaktionskammer derart reagiert, dass diese aus dem Gas abgeschieden wird.

6. Verfahren nach Anspruch 5, dadurch gekennzeichnet, dass der Gasstrom nach Durchströmen einer oder mehrerer Reaktionskammern umgeleitet und durch eine oder mehrere bereits durchströmte Reaktionskammern zurückgeführt wird.

7. Vorrichtung zur Durchführung des Verfahrens nach Anspruch 1, mit einem Gehäuse mit einer Ein- und Austrittsöffnung für das zu reinigende Gas, in dem eine mit Platten versehene Welle drehbar angeordnet ist, dadurch gekennzeichnet, dass die auf dem Umfang der Welle (12) angeordneten Platten (8) sich in deren Achsrichtung erstrecken, und dass an den Stirnseiten des Gehäuses (11) die Gasein- und -austrittsöffnungen sowie in Drehrichtung vor diesen Lufteint- und -austrittsöffnungen ausgebildet sind.

8. Vorrichtung nach Anspruch 7, dadurch gekennzeichnet, dass die Lufteintrittsöffnung (5) in Umfangsrichtung über einen kürzeren Abschnitt ausgebildet ist als die in einem Abstand von der Lufteintrittsöffnung ausgebildete Gaseintrittsöffnung (6).

9. Vorrichtung nach Anspruch 8, dadurch gekennzeichnet, dass der Abstand zwischen der Lufteintrittsöffnung (5) und der Gaseintrittsöffnung (6) wenigstens das Zweifache des Abstandes zwischen zwei eine Reaktionskammer (13) begrenzenden Platten (8) beträgt.

10. Vorrichtung nach den Ansprüchen 7 bis 9, dadurch gekennzeichnet, dass die Welle zur Unterbringung einer Beheizung oder Kühlung als Hohlzylinder (12) ausgebildet ist.

11. Vorrichtung nach den Ansprüchen 7 bis 10, dadurch gekennzeichnet, dass auf der Innenseite des Gehäuses (11) Ausbuchtungen und/oder Prallbleche (10) zur Verwirbelung des Gasstromes ausgebildet sind.

## Revendications

1. Procédé d'épuration de gaz, notamment d'effluents industriels gazeux, dans lequel les gaz sont dirigés dans des chambres de réaction qui se renouvellent de façon continue, dont les surfaces internes en mouvement sont recouvertes d'une mince couche de matières solides qui se forme par la plongée de ces surfaces internes dans un liquide de mouillage et par un séchage subséquent quand elles sont ressorties du liquide et dont la composition chimique est telle que la surface de la couche de matières solides réagit avec des impuretés solides, liquides et de préférence gazeuses du gaz et forment des produits de réaction solides qui se détachent avec les couches de matières solides après immersion dans le liquide de mouillage, caractérisé en ce que les surfaces internes des chambres de réaction sont séchées par de l'air chaud lorsqu'elles sont ressorties du liquide de mouillage et les gaz à épurer sont ensuite envoyés dans les chambres de réaction.

2. Procédé selon la revendication 1, caractérisé en ce que l'humidité du gaz utilisé pour le séchage est éliminée en circuit fermé en dehors des chambres de réaction.

3. Procédé selon les revendications 1 et 2, caractérisé en ce que les surfaces internes des chambres de réaction sont au moins partiellement refroidies ou chauffées.

4. Procédé selon l'une quelconque des revendications 1 à 3, caractérisé en ce que l'on utilise en tant que liquide de mouillage une solution aqueuse d'une combinaison qui réagit avec au moins l'un des composants à éliminer des gaz, combinaison qui comprend un réactif qui détache de la surface porteuse et sans assistance mécanique le produit de réaction ainsi obtenu, par immersion dans le liquide de mouillage et modification de la tension de surface.

5. Procédé selon l'une quelconque des revendications précédentes, caractérisé en ce que les

couches de matières solides sont composées de manière que le produit de réaction formé après envoi unique du gaz pollué contenant des impuretés composantes sur la surface de la couche sèche réagisse avec d'autres impuretés composantes dans une chambre de réaction suivante afin que ces dernières soient séparées du gaz.

6. Procédé selon la revendication 5, caractérisé en ce que le courant gazeux est dévié après avoir parcouru une ou plusieurs chambres de réaction et est renvoyé dans une ou plusieurs chambres de réaction déjà parcourues par le courant.

7. Dispositif pour la mise en œuvre du procédé selon la revendication 1, comprenant un logement avec une ouverture d'entrée et une ouverture de sortie pour le gaz à épurer, dans lequel est monté de façon rotative un arbre muni de plaques, caractérisé en ce que les plaques (8) montées sur la périphérie de l'arbre (12) s'étendent dans la direction de son axe et en ce que sont constituées sur les côtés frontaux du logement (11) des ouvertures d'entrée et de sortie de gaz ainsi qu'en amont de celles-ci dans le sens de la rotation des ouvertures d'entrée et de sortie d'air.

8. Dispositif selon la revendication 7, caractérisé en ce que l'ouverture d'entrée d'air (5) est formée en direction périphérique sur une section plus courte que l'ouverture d'entrée de gaz (6) formée à distance de l'ouverture d'entrée d'air.

9. Dispositif selon la revendication 8, caractérisé en ce que la distance entre l'ouverture d'entrée d'air (5) et l'ouverture d'entrée de gaz (6) est au moins le double de la distance séparant deux plaques (8) limitant une chambre de réaction (13).

10. Dispositif selon l'une quelconque des revendications 7 à 9, caractérisé en ce que l'arbre est constitué sous forme d'un cylindre creux (12) permettant la mise en place d'un chauffage ou d'un refroidissement.

11. Dispositif selon l'une quelconque des revendications 7 à 10, caractérisé en ce que sont constituées sur le côté interne du logement (11) des indentations et/ou des chicanes (10) pouvant provoquer la formation de tourbillons dans le courant gazeux.

## Claims

1. Process for cleaning gases, in particular industrial exhaust gases, in which the gases are passed through reaction chambres which are continuously renewed and the inner moving surfaces of which are coated with a thin solid layer which is formed by immersion of these inner surfaces in a wetting liquid followed by drying after they have emerged and the chemical composition of which is designed so that the surface of the solid layer reacts with solid, liquid or preferably gaseous impurities in the gas and forms solid reaction products which, after immersion, dissolve in the wetting liquid together with the solid layers, characterized in that after emerging from the wetting liquid the inner surfaces of the reaction chambers are dried with hot air after which the gases to be cleaned are passed through the reaction chambers.

2. Process according to Claim 1, characterized in that the moisture content of the gas used for drying is precipitated in a closed circuit external to the reaction chambers.

3. Process according to Claims 1 and 2, characterized in that the inner surfaces of the reaction chambers are at least partially cooled or heated.

4. Process according to Claims 1 to 3, characterized in that, as the wetting liquid, an aqueous solution of a compound is used which reacts with at least one of the components to be separated from the gases and which contains a reagent which, on immersion in the wetting liquid, dissolves a reaction product obtained in this way by changing the surface tension of the carrier surface without mechanical assistance.

5. Process according to one of the preceding claims, characterized in that the solid layers are composed in such a way that the reaction product formed on the surface of the dry layer with one contaminating component after a single pass of the contaminated gas reacts with a further contaminating component in a subsequent reaction chamber in such a way that this is precipitated from the gas.

6. Process according to Claim 5, characterized in that after flowing through one or more reaction chambers the gas stream is diverted and is led back through one or more reaction chambers through which the gas has already passed.

7. Device for carrying out the process according to Claim 1, with a casing having an inlet opening and an outlet opening for the gas to be cleaned, wherein a shaft provided with panels is rotatably mounted, characterized in that the panels (8) arranged on the circumference of the shaft (12) extend in the axial direction thereof, and that the gas inlet and outlet openings and, upstream thereof in the direction of rotation, air inlet and outlet openings are formed in the end faces of the casing (11).

8. Device according to Claim 7, characterized in that the air inlet opening (5) is formed over a shorter sector in the circumferential direction than the gas inlet opening (6) formed at a distance from the air inlet opening.

9. Device according to Claim 8, characterized in that the distance between the air inlet opening (5) and the gas inlet opening (6) is at least twice the distance between two panels (8) defining a reaction chamber (13).

10. Device according to Claims 7 to 9, characterized in that the shaft is designed as a hollow cylinder (12) to accommodate heating or cooling.

11. Device according to Claims 7 to 10, characterized in that bulges or deflector plates (10) are formed on the inside of the casing (11) for creating turbulence in the gas stream.

Fig.1

Fig.2